# EUROPEAN PATENT APPLICATION

(11) **EP 2 453 388 A1**
(43) Date of publication of application: **16.05.2012**
(21) Application number: 11155719.5
(22) Date of filing: 23.02.2011
(51) Int. Cl.: G06K 9/20, G06K 9/00, G06K 9/62, G06F 3/01

(54) **Method for user gesture recognition in multimedia device and multimedia device thereof**

(30) Priority: 12.11.2010 KR 20100112533
(71) Applicant: LG ELECTRONICS INC., Yeongdeungpo-gu Seoul 150-721 (KR)
(72) Inventor: Kang, Mingoo, 451-731, Gyeonggi-do (KR)
(74) Representative: Cabinet Plasseraud

(57) **Abstract**

A display device includes a first sensor to detect a first image of a person and a second sensor to detect a second image of the person. A storage device stores first information and second information, where the first information identifies a plurality of gestures mapped to respective ones of a plurality of functions identified by the second information. A processor recognizes a gesture of the person based on the first and second images, and performs a function corresponding to the recognized gesture based on the first and second information.

## Description

### 1. Field

One or more embodiments described herein related to a display device.

### 2. Background

A variety of command input techniques have been developed for televisions, computers, mobile terminals, and other types of display devices. However, improvements are needed, especially in order to satisfy the requirements of the ever-increasing variety of multimedia services that are expected to be offered to the consumer through these devices.

### BRIEF DESCRIPTION OF THE DRAWINGS

FIG. 1 shows one embodiment of multimedia system.

FIG. 2 shows an example of a multimedia device in the system.

FIG. 3 shows one embodiment of a multimedia device that operates based on a plurality of heterogeneous images sensors and camera-taking screens.

FIG. 4 shows steps included in one embodiment of detecting and recognizing information using the image sensors.

FIG. 5 shows a face vector stored in a database.

FIG. 6 shows one embodiment of the operation of a plurality of heterogeneous image sensors, which interact with a multimedia device.

FIG. 7 shows one embodiment of a plurality of heterogeneous image sensors and a multimedia device.

FIG. 8 shows another embodiment of a plurality of heterogeneous image sensors and a multimedia device.

FIG. 9 shows a plurality of heterogeneous image sensors.

FIG. 10 shows an example of a first image sensor of the plurality of heterogeneous image sensors.

FIG. 11 shows another example of a first image sensor.

FIG. 12 shows steps included one method of calculating a distance using a first image sensor as in FIG. 11.

FIG. 13 shows a detailed view of the multimedia device in FIGS. 1 and 2.

FIG. 14 shows one embodiment of broadcasting system including a multimedia device.

FIG. 15 shows steps included in one embodiment of a method for recognizing gestures in a multimedia device.

FIG. 16 shows one type of flow chart describing performance of a specific command related to the aforementioned method.

FIG. 17 shows one way of combining distance information and image information in the aforementioned method.

FIG. 18 shows a display screen having a menu for recognizing a gesture.

FIG. 19 shows a display screen including a notification message.

FIG. 20 shows a display screen of an image of a gesture to be recognized.

FIG. 21 shows a display screen including one type of warning message.

FIG. 22 shows a display screen having a gesture mapping menu.

FIG. 23 shows a display screen having a user gesture list.

FIG. 24 shows a display screen allowing for input of a letter (or character) using a gesture.

FIG. 25 shows a display screen for changing a user gesture input mode.

FIG. 26 shows one embodiment of a database for user gestures.

FIG. 27 shows a screen for loading user gesture data for respective users.

FIG. 28 shows a screen having a user-specific user gesture set-up menu.

### DETAILED DESCRIPTION

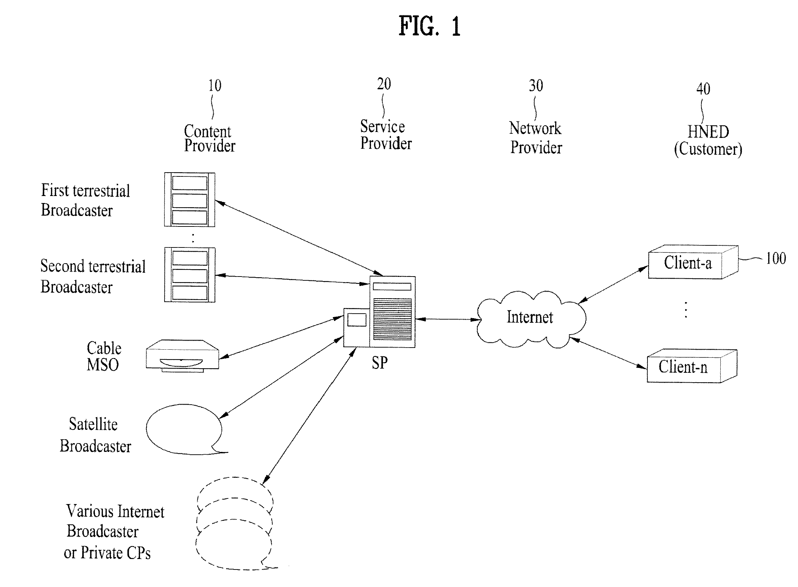

FIG. 1 shows an example of a system that includes a multimedia device. Although a television is shown, other devices including mobile terminals, computer displays, tablets, and virtually any other device capable of displaying information may correspond to the multimedia device.

As shown in FIG. 1, the system includes a content provider (CP) 10, a service provider (SP) 20, a network provider (NP) 30, and a home network end user (HNED) 40. The HNED 40 corresponds to, for example, a client 100 which is an example of a multimedia device.

The content provider 10 manufactures various contents and provides them. Examples of the content provider 10 include a terrestrial broadcaster, a cable system operator (SO), a multiple system operator (MSO), a satellite broadcaster, and an Internet broadcaster, as illustrated in FIG. 1. Also, the content provider 10 may provide various applications in addition to broadcast contents.

The service provider 20 can provide contents provided by the content provider 10 by service-packaging them. For example, the service provider 20 of FIG. 1 can package first terrestrial broadcasting, second terrestrial broadcasting, cable MSO, satellite broadcasting, various kinds of Internet broadcasting, application, etc. and provide the packaged one to a user.

The network provider 30 may provide a network for providing a service to the client 100. The client 100 may construct a home network end user (HNED) to receive a service.

The client 100 may provide contents through the network. In this case, the client 100 may be a content provider contrary to the above. The content provider 10 may receive contents from the client 100. In this case, it is advantageous in that bidirectional content service or data service is available.

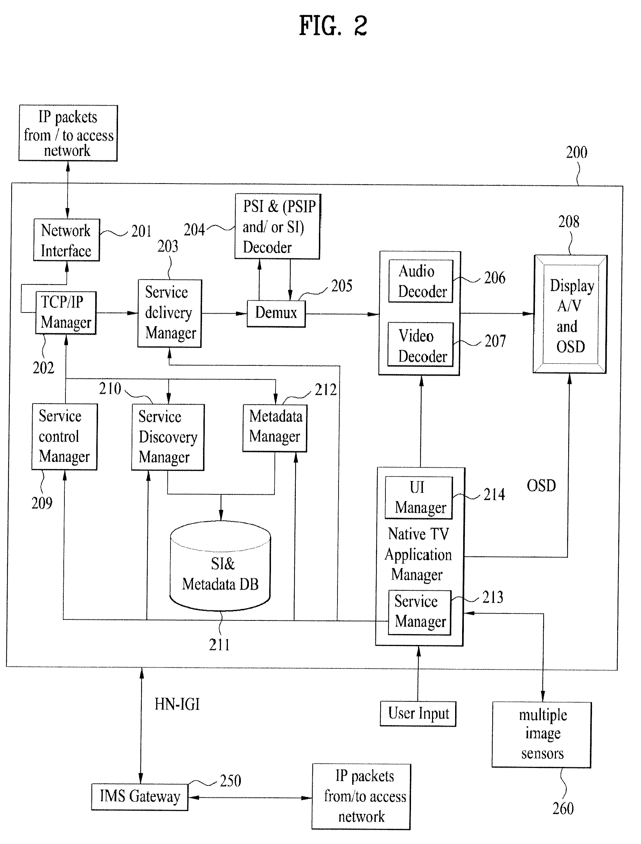

FIG. 2 shows an example of a multimedia device in FIG. 1 which includes a network interface 201, a TCP/IP manager 202, a service delivery manager 203, a demultiplexer (Demux) 205, a PSI& (PSIP and/or SI) decoder 204, an audio decoder 206, a video decoder 207, a display A/V and OSD module 208, a service control manager 209, a service discovery manager 210, a metadata manager 212, an SI&Metadata DB 211, a UI manager 214, and a service manager 213. Moreover, a plurality of heterogeneous image sensors 260 are connected with the multimedia device 200, by a connection mode of a USB mode, for example. Also, although the plurality of heterogeneous image sensors 260 are designed as separate modules in FIG. 2, the plurality of heterogeneous images sensors 260 may be designed in such a manner that they are housed in the multimedia device 200.

The network interface 201 receives packets from a network, and transmits the packets to the network. In other words, the network interface 201 receives services, contents, etc. from the service provider through the network.

The TCP/IP manager 202 is involved in packets received in the multimedia device 200 and packets transmitted from the multimedia device 200, i.e., packet transfer from the source to the destination. The service delivery manager 203 takes the role of control of received service data. For example, if the service delivery manager 203 controls real-time streaming data, it can use RTP/RTCP. If the service delivery manager 203 transmits the real-time streaming data by using RTP, it parses the received packets in accordance with RTP and transmits the parsed packets to the demultiplexer 205 or stores the parsed packets in the SI&Metadata DB 211 under the control of the service manager 213. The service delivery manager 203 feeds the received information back to a server, which provides a service, by using RTCP.

The demultiplexer 205 demultiplexes the received packets to audio, video and PSI (Program Specific Information) data and then transmits the demultiplexed data to the audio decoder 206, the video decoder 207, and the PSI&(PSIP and/or SI) decoder 204, respectively.

The PSI&(PSIP and/or SI) decoder 204 receives and decodes PSI section, PSIP (Program and Service Information Protocol) section or SI (Service Information) section, which is demultiplexed by the demultiplexer 205.

Also, the PSI&(PSIP and/or SI) decoder 204 decodes the received sections to make a database for service information, and stores the database for service information in the SI&Metadata DB 211.

The audio/video decoders 206/207 decode the video data and the audio data, which are received from the demultiplexer 205.

The UI manager 214 provides a graphic user interface (GUI) for the user by using an on screen display (OSD), etc. and performs a receiving operation based on a key input from the user. For example, if a key input signal for channel selection is input from the user, UI manager 214 transmits the key input signal to service manager 213.

The service manager 213 controls managers related to the service, such as the service delivery manager 203, the service discovery manager 210, the service control manager 209, and the metadata manager 212.

Also, the service manager 213 makes a channel map and selects a channel by using the channel map in accordance with the key input signal received from the UI manager 214. The service discovery manager 210 provides information required to select the service provider that provides services. If a signal related to channel selection is received from the service manager 213, the service discovery manager 210 discovers a corresponding service by using the received information.

The service control manager 209 takes the role of selection and control of the service. For example, if the user selects a live broadcasting service like the existing broadcasting mode, the service control manager 209 uses IGMP or RTSP. If the user selects a video on demand (VOD) service, the service control manager 209 selects and controls the service by using RTSP. The metadata manager 212 manages metadata related to the service and stores the metadata in the SI&Metadata DB 211.

The SI&Metadata DB 211 stores the service information decoded by the PSI&(PSIP and/or SI) decoder 204, the metadata managed by the metadata manager 212, and the information required to select the service provider provided by the service discovery manager 210. Also, the SI&Metadata DB 211 may store setup data for the system.

The IG 250 is a gateway where functions required to access IMS based IPTV services are collected.

The plurality of heterogeneous image sensors 260 illustrated in FIG. 2 are designed to take a single image or a plurality of images of a person or object located in the periphery of the multimedia device 200. In more detail, the plurality of heterogeneous image sensors 260 are designed to operate the single image or the plurality of images continuously, periodically, at a selected time, or at a specific condition only, as described later in more detail.

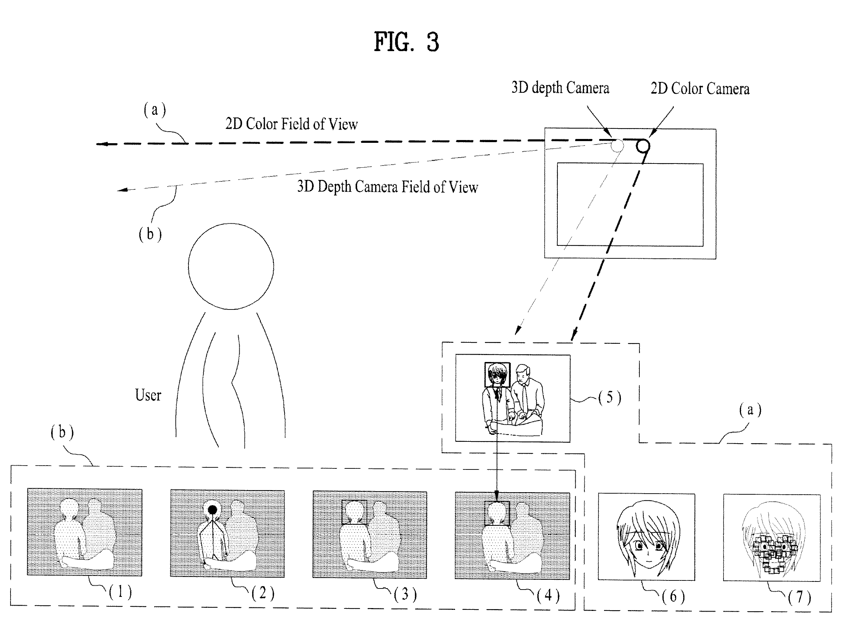

FIG. 3 shows an embodiment of a multimedia device that includes a plurality of heterogeneous images sensors. A first image sensor related to depth data processing include a field not suitable for long-distance face recognition due to limited resolution (for example, maximum VGA level) and a recognition distance (for example, 3.5m). A second image sensors related to color data processing have drawbacks in that they have a slow recognition speed and are not robust to light condition. In order to solve the drawbacks of the image sensors, the multimedia device according to one embodiment is designed to interact with a hybrid type image sensor module that is a hybrid type of the first image sensor and the second image sensor.

An IR camera or depth camera is used as the first image sensor. In more detail, a time of flight (TOF) type IR camera or depth camera and a structured light type IR camera or depth camera have been discussed. The TOF type IR camera or depth camera calculates distance information by using the time difference resulting from emission of infrared rays. The structured light type IR camera or depth camera calculates distance information by emitting infrared rays to a specific pattern and analyzing a modified pattern. The first image sensor is advantageous in view of depth data recognition and processing speed, and easily senses object, person, etc. even at a dark place. However, the first image sensor has a drawback in that it has low resolution at a long distance.

A color camera or RGB camera is used as the second image sensor. In more detail, a stereo camera type color camera or RGB camera and a mono camera type color camera or RGB camera have been discussed. The stereo camera type color camera or RGB camera detects and traces the hand or face based on image time comparison information taken through two cameras. The mono camera type color camera or RGB camera detects and traces the hand or face based on shape and color information taken through one camera. The second image sensor is advantageous in that it has more improved resolution than that of the first image sensor, whereas the second image sensor has drawbacks in that it is vulnerable to peripheral lighting and it is difficult to recognize the corresponding object at a dark place. In particular, the second image sensor has a drawback in that it is difficult to recognize exact depth.

In order to solve the aforementioned problems, as illustrated in FIG. 3, one embodiment of a multimedia device is designed to have both the first image sensor and the second image sensor. The image sensors may be designed in such a manner that they are embedded in the multimedia device, or may be designed as separate hardware modules. As shown in FIG. 3(b), the first image sensor takes images that include users located in the periphery of the multimedia device. Detailed taking-images are illustrated in (1), (2), (3) and (4) of FIG. 3 in due order.

If image-taking and data analysis of the first image sensor are completed, as illustrated in FIG. 3(a), the second image sensor takes images of a face of a specific user. Detailed taking-images are illustrated in (5), (6), and (7) of FIG. 3 in due order.

The first image sensor of the plurality of heterogeneous image sensors according to one embodiment takes first images located in the periphery of the multimedia device and extracts depth data from the taken first images. As illustrated in (1) of FIG. 3, the first image sensor can be designed in such a manner that a field of each object is displayed at different contrast ratios depending on the distance.

Moreover, the first image sensor can recognize a face of at least one user by using the extracted depth data. In other words, the first image sensor extracts body information (for example, face, hand, foot, joint, etc.) of the user by using the database, etc., as illustrated in (2) of FIG. 3, and acquires location coordinates and distance information of a face of a specific user as illustrated in (3) of FIG. 3. In more detail, the first image sensor is designed to calculate values x, y, and z which are location information on the face of the user, wherein the x means the location on a horizontal axis of the face in the taken first image, the y means the location on a vertical axis of the face in the taken first image, and the z means the distance between the face of the user and the first image sensor.

Also, among the plurality of heterogeneous image sensors, according to one embodiment the second image sensor for extracting color images takes second images of the recognized face of the user, and is illustrated in (5) of FIG. 3.

If the first image sensor and the second image sensor illustrated in FIG. 3 are designed to adjoin each other, an error due to the difference in physical location may be disregarded. However, according to another embodiment, the second image sensor is designed to compensate for the coordinate information or distance information acquired by the first image sensor by using the information on the difference in physical location and to take the user by using the compensated coordinate information or distance information.

Also, if the first image sensor and the second image sensor are designed to be arranged horizontally from the ground, the information on the difference in physical location can be set based on a horizontal frame. The second image sensor, as illustrated in (7) of FIG. 3, extracts feature information from the taken second image. The feature information is data corresponding to a specif part (for example, mouse, nose, eye, etc.) for identifying a plurality of users who use the multimedia device.

Moreover, the second image sensor may zoom in a zone corresponding to the face of the user based on the coordinate values (the values x, y, and z) obtained through image-taking of the first image sensor. This means a procedure of switching from (5) of FIG. 3 to (6) of FIG. 3.

If image-taking and analysis of the first image sensor and the second image sensor are completely performed, the multimedia device according to one embodiment of the present invention accesses a memory that stores data corresponding to the extracted feature information, and extracts information for identifying a specific user stored in the memory.

If the information for identifying a specific user exists in the memory, the multimedia device provides a service previously set for the specific user.

On the other hand, if the information for identifying a specific user does not exist in the memory, the multimedia device is designed to display a guide message for storing the recognized user information in the memory.

As described above, according to one embodiment, the first image sensor is designed to detect user location information or coordinate information on the face of the user while the second image sensor is designed to recognize the face by using the data acquired by the first image sensor.

Moreover, according to another embodiment, the second image sensor is designed in such a manner that it is operated only in case of a specific condition. For example, if the distance information acquired by the operation of the first image sensor between the user and the first image sensor is less than a first reference value, or if a recognition rate on the face of the user, which is acquired by the operation of the first image sensor, is more than a second reference value, the face of the user located in the periphery of the multimedia device is detected and recognized by the first image sensor only.

On the other hand, if the distance information acquired by the operation of the first image sensor exceeds the first reference value, or if the recognition rate on the face of the user, which is acquired by the operation of the first image sensor, is less than the second reference value, the second image sensor is additionally used to recognize the face of the user.

According to another embodiment, the second image sensor is designed to perform zoom-in by using the distance information acquired by the first image sensor in the procedure of recognizing the face of the user and to take the face only by using face coordinate information acquired by the first image sensor.

Accordingly, the different types of heterogeneous image sensors are used as above, it is advantageous in that it enables long-distance face recognition and data processing speed is more improved than that of the related art.

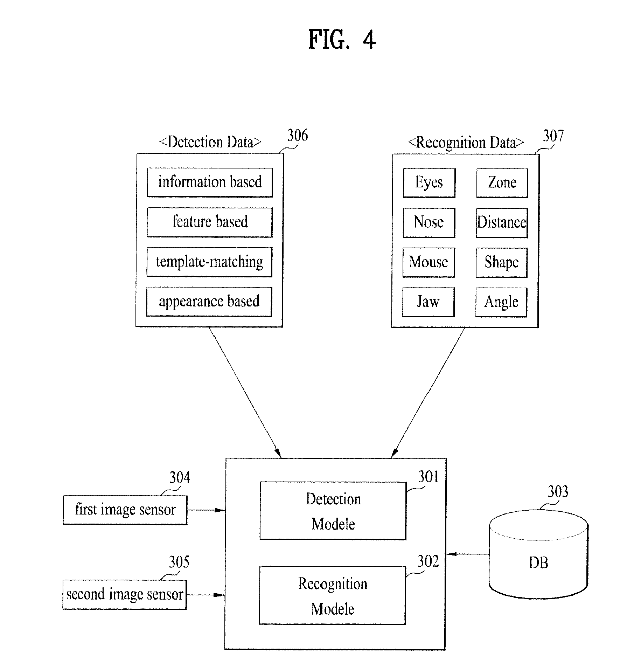

FIG. 4 shows a procedure of using detection data and recognition data in a plurality of heterogeneous image sensors and a multimedia device according to one embodiment.

Face detection is performed by a process different from that of face recognition. The face detection includes a process of detecting a face zone within one image, whereas the face recognition is a process of recognizing whether the detected face corresponds to which specific user. In particular, the procedure of performing face detection by using the first image sensor and the procedure of performing face recognition by using the second image sensor in accordance with one embodiment will be described with reference to FIG. 4.

In FIG. 4, a multimedia device according to one embodiment includes a detection module 301, a recognition module 302, a database (DB) 303, a first image sensor 304, and a second image sensor 305. The multimedia device uses detection data 306 and recognition data 307 if necessary. The detection data 306, for example, may be generated based on knowledge-based detection techniques, feature-based detection techniques, template matching techniques, and appearance-based detection techniques. Also, the recognition data 307, for example, include data for identifying a specific user, such as eyes, nose, mouse, jaw, zone, distance, shape, and angle.

Moreover, the detection module 301 determines the presence of the face of the user by using the image data received from the first image sensor 304. Also, in a procedure of estimating the zone where the face of the user is located, data related to the aforementioned knowledge-based detection techniques, feature-based detection techniques, template matching techniques, and appearance-based detection techniques are used.

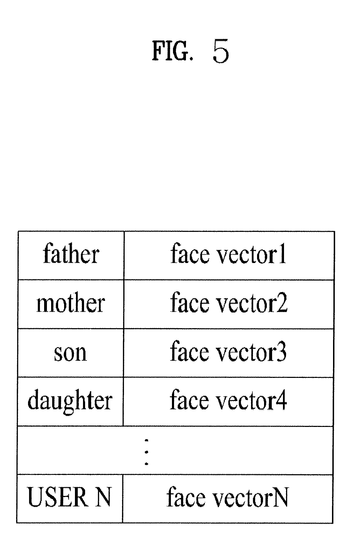

The recognition module 302 identifies whether the recognized user is a specific user by using the image data received from the second image sensor 305. At this time, the recognition module 302 compares the received image data with face vector information stored in the DB 303 based on the aforementioned recognition data 307. This will be described in more detail with reference to FIG. 5.

FIG. 5 shows an example of a listing of face vectors stored in a database. These face vectors are of users who use the multimedia device. The face vectors, for example, are a data set of feature information appearing on the faces of the users, and are used to identify each of the specific users.

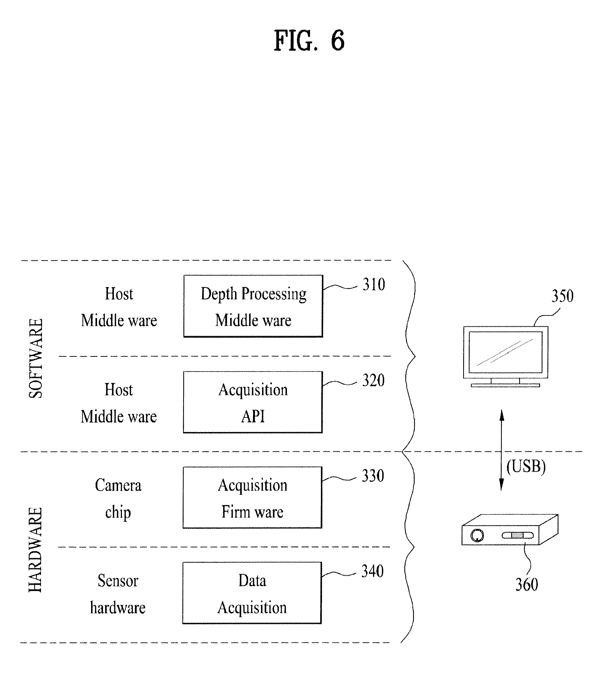

FIG. 6 shows operation of a plurality of heterogeneous image sensors, which interact with a multimedia device according to one or more embodiments described herein.. In this embodiment, the operation is performed through images input by the plurality of heterogeneous image sensors depending on a hardware field 360 of the image sensor and a software field 350 of the multimedia device that processes the data received from the image sensor. Although hardware field 360 is illustrated as a separate module in FIG. 6, it may be embedded in the multimedia device that processes the software field 350.

The hardware field 360 includes a data collection field 340 and a firmware field 330. The data collection field 340 receives original data recognized by the multimedia device from the image sensor, and includes an IR light projector, a depth image sensor, a color image sensor (RGB image sensor), a microphone, and a camera chip.

The firmware field 330 serves to connect the hardware field with the software field. Also, the firmware field 330 may be used as a host application required by a specific application, and performs downsampling and mirroring.

Accordingly, the data collection field 340 and the firmware field 330 interact with each other. The data collection field 340 and the firmware field 330 can control the hardware field 360 through their interaction. Also, the firmware field can be driven by a camera chip.

Also, the software field 350 includes an application programming interface (API) field 320, and a middleware field 310. The API field 320 can be implemented by the controller of the multimedia device. Also, if a camera module is configured as an external device separately from the multimedia device, the API field can be implemented by a personal computer, a game console, a set-top box, etc. Also, the API field 320 could be a simple API that allows the multimedia device to drive the sensor of the hardware field.

The middleware field 310 is a recognition algorithm field and can include a depth processing middleware. Also, the middleware field can provide an application together with an explicit user control API even if the user inputs gesture through either his(her) hand or his(her) whole body. Also, the middleware field can include an algorithm that performs an operation for searching for the location of the hand of the user, an operation for tracing the location of the user, an operation for extracting skeleton features of the user, and an operation for respectively recognizing the user and background from the input image. The algorithm can be operated by using depth information, color information, IR information, and audio information, which are acquired from the hardware field.

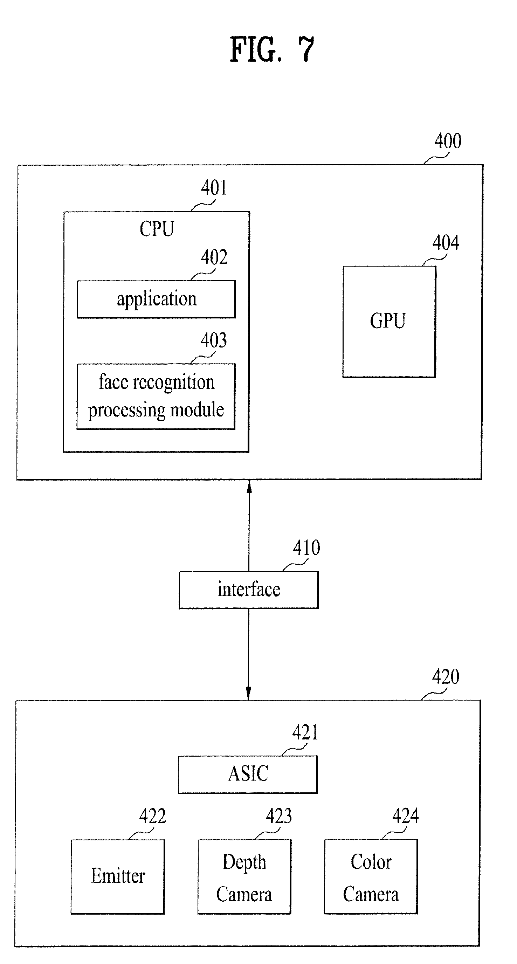

FIG. 7 shows a plurality of heterogeneous image sensors and a multimedia device according to one embodiment. Although the plurality of heterogeneous image sensors and the multimedia device are separately illustrated in FIG. 7, the multiple sensors/cameras may be designed in such a manner that they are embedded in the multimedia device.

The multimedia device 400 according to one embodiment is designed to include modules such as a central processing module (CPU) 401 and a graphic processing module 404, wherein the CPU 401 includes an application 402 and a face recognition processing module 403.

A plurality of heterogeneous image sensors 420 according to one embodiment are designed to include modules such as an application specific integrated circuit (ASIC) 421, an emitter 422, a first image sensor 423, and a second image sensor 424. The multimedia device 400 is connected with the plurality of heterogeneous image sensors 420 through a wire or wireless interface 410. For example, a universal serial bus (USB) interface may be used as the wire or wireless interface 410. It is to be understood that the modules of FIG. 7 are only exemplary.

The emitter 422 emits light to at least one user located in the periphery of the multimedia device 400. The first image sensor 423 takes a first image by using the emitted light, extracts depth data from the taken first image, and detects a face of the at least one user by using the extracted depth data. Also, the second image sensor 424 takes a second image on the face of the detected user and extracts feature information from the taken second image.

The extracted feature information is transmitted to the face recognition processing module 403 of the multimedia device through the interface 410. Although not illustrated in FIG. 7, the face recognition processing module 403 is designed to include a receiver, a memory, an extractor, and a controller.

The receiver of the face recognition processing module 403 receives feature information transmitted through the plurality of hetero image sensors 420 and the interface 410. Moreover, the memory of the face recognition processing module 403 stores feature information on at least one user and ID corresponding to the feature information.

Accordingly, the extractor of the face recognition processing module 403 extracts the ID corresponding to the received feature information from the memory, and the controller of the face recognition processing module 403 is designed to automatically perform previously set functions corresponding to the ID.

If the face recognition processing module is designed to be performed by the CPU of the multimedia device as illustrated in FIG. 7, it is advantageous in that the design cost of the camera is lowered, and it is also advantageous in view of extensibility such as recognition of various faces and addition of functions.

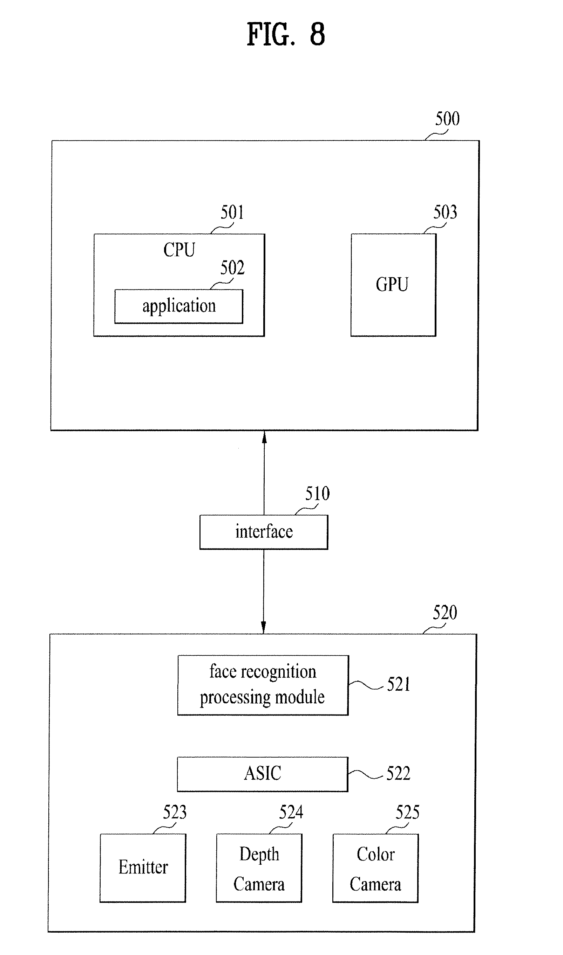

FIG. 8 shows a plurality of heterogeneous image sensors and a multimedia device according to another embodiment. Although the heterogeneous image sensors and the multimedia device are separately illustrated in FIG. 8, the multiple cameras may be designed in such a manner that they are embedded in the multimedia device.

The multimedia device 500 according to one embodiment is designed to include modules such as a central processing module (CPU) 501 and a graphic processing module 503, wherein the CPU 501 includes an application 502. In the mean time, a plurality of heterogeneous image sensors 520 according to one embodiment of the present invention are designed to include modules such as a face recognition processing module 521, an application specific integrated circuit (ASIC) 522, an emitter 523, a first image sensor 524, and a second image sensor 525. The multimedia device 500 is connected with the plurality of heterogeneous image sensors 520 through a wire or wireless interface 510. For example, a universal serial bus (USB) interface may be used as the wire or wireless interface 510. It is to be understood that the modules of FIG. 8 are only exemplary and the scope of the present invention should be defined basically by claims.

FIG. 8 is different from FIG. 7 in that the face recognition module 521 is built in the plurality of heterogeneous image sensors 520. As illustrated in FIG. 8, if the face recognition processing module is designed to be performed by the plurality of heterogeneous image sensors 520, various types of cameras can be designed through an independent platform.

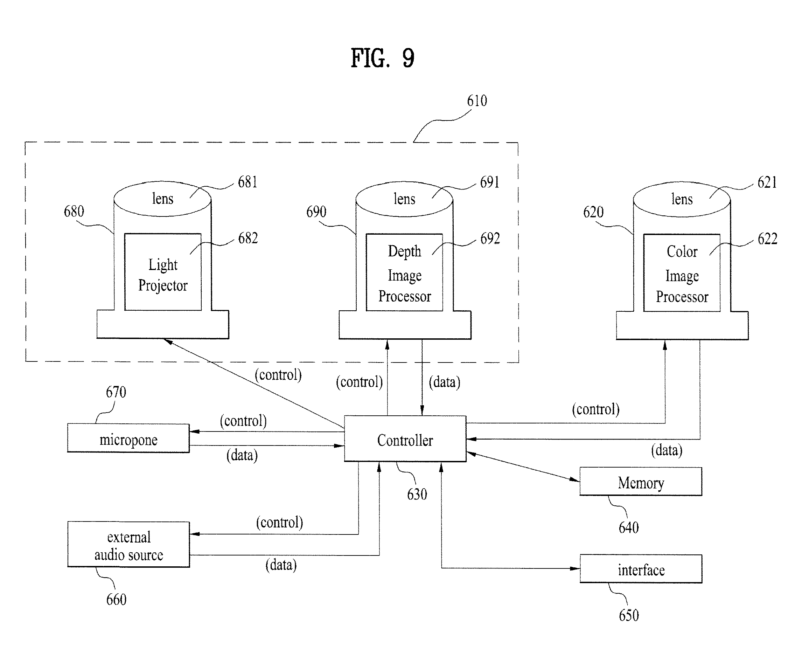

FIG. 9 shows a plurality of heterogeneous image sensors according to another embodiment. The plurality of heterogeneous image sensors include a first image sensor group 610, a second image sensor 620, a controller 630, a memory 640, and an interface 650, and are designed to receive audio data from a microphone 670 and an external audio source 660 under the control of the controller 630.

The memory 640, for example, may be designed as a flash memory. The interface 650 is designed as a USB interface and is connected with an external multimedia device. In the mean time, the first image sensor group 610 includes am emitter 680 and a first image sensor 690. The emitter can be designed as an infra-red (IR) emitter, for example.

Moreover, a light projector 682 of the emitter 680 projects a lens 681 to emit light to at least one user located in the periphery of the multimedia device, under the control of the controller 630.

Also, under the control of the controller 630, the first image sensor 690 takes a first image by using the light received through a lens 691, extracts depth data from the taken first image, and transmits the extracted data to the controller 630.

The controller 630 detects a face of the at least one user by using the transmitted depth data, and controls the second image sensor 620.

The second image sensor 620 takes a second image on the face of the detected user applied through a lens 621, under the control of the controller 630. Moreover, the second image sensor 620 transmits feature information extracted from the taken second image to the controller 630.

The controller 630 is designed to transmit the extracted feature information to the multimedia device by using the interface 650. Accordingly, the multimedia device that has received the feature information can quickly identify which user of users stored in the DB is the one corresponding to the taken image.

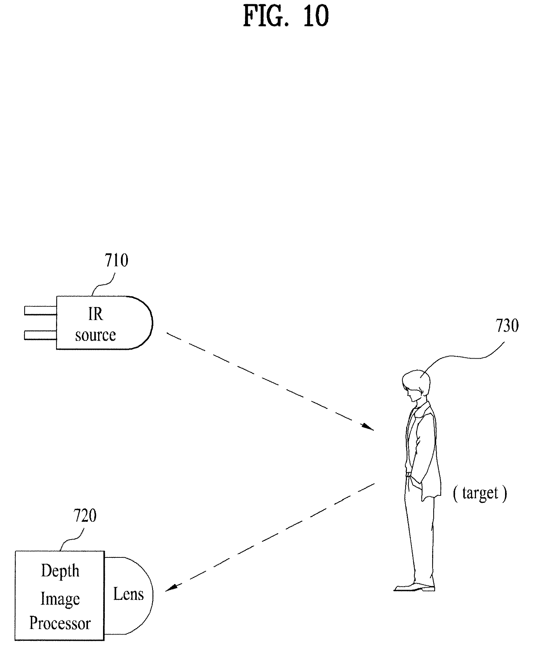

FIG. 10 shows an example of a first image sensor of a plurality of heterogeneous image sensors according to one embodiment. As shown, an IR source 710 may correspond to the emitter 680 of FIG. 9, and a depth image processor 720 may correspond to the first image sensor 690 of FIG. 9. Accordingly, the description of FIG. 9 and FIG. 10 may complementarily be applied to this embodiment. Also, the camera illustrated in FIG. 10 may be designed in accordance with the aforementioned structured light type.

As illustrated in FIG. 10, the IR source 710 is designed to continuously project a coded pattern image to a target user 730. The depth image processor 720 estimates the location of the user by using information of an initial pattern image distorted by the target user 730.

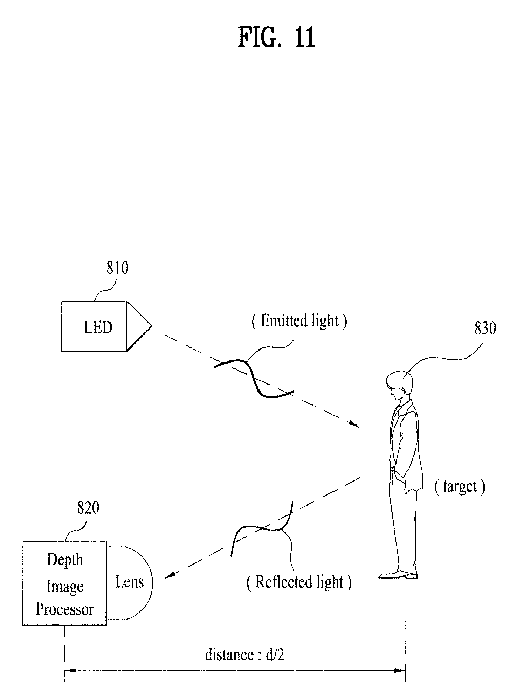

FIG. 11 shows another example of a first image sensor of a plurality of heterogeneous image sensors. As shown, an LED 810 may correspond to the emitter 680 of FIG. 9, and a depth image processor 820 illustrated in FIG. 11 may correspond to the first image sensor 690 of FIG. 9. Accordingly, the description of FIG. 9 and FIG. 11 may complementarily be applied to this embodiment. Also, the camera illustrated in FIG. 11 may be designed in accordance with the aforementioned TOF type.

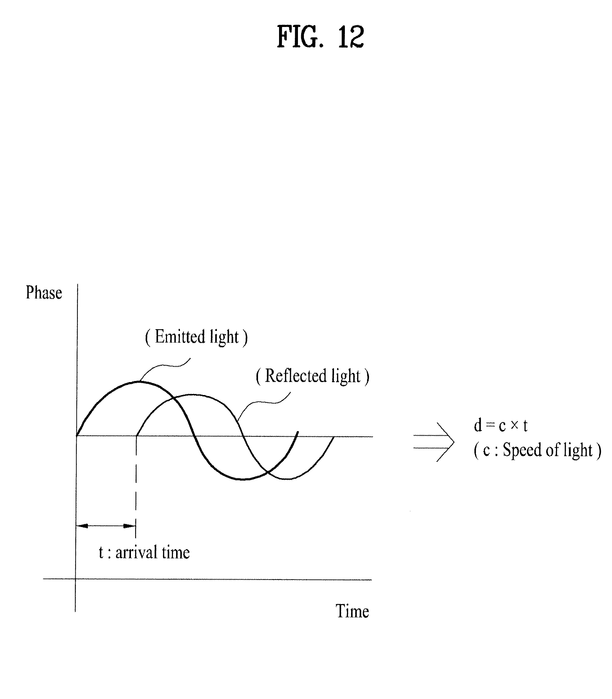

As illustrated in FIG. 11, the light emitted by the LED 810 is transmitted to a target user 830. The light reflected by the target user 830 is transmitted to the depth image processor 820. The modules illustrated in FIG. 11 calculate the location of the target user 830 by using information on the time difference, unlike FIG. 10. This will be described in more detail with reference to FIG. 12.

FIG. 12 shows one embodiment of a method of calculating a distance by using a first image sensor illustrated in FIG. 11. As illustrated in a left graph of FIG. 12, a value t which is the arrival time can be obtained through the time difference between the emitted light and the reflected light.

Also, as illustrated in an equation at the right side of FIG. 12, the distance between the LED 810 and the target user 830 and the distance between the target user 830 and the depth image processor 820 are calculated by multiplication of the speed of light and the value t. Accordingly, the distance between the LED 810 or the depth image processor 820 and the target user 830 is estimated as 1/d.

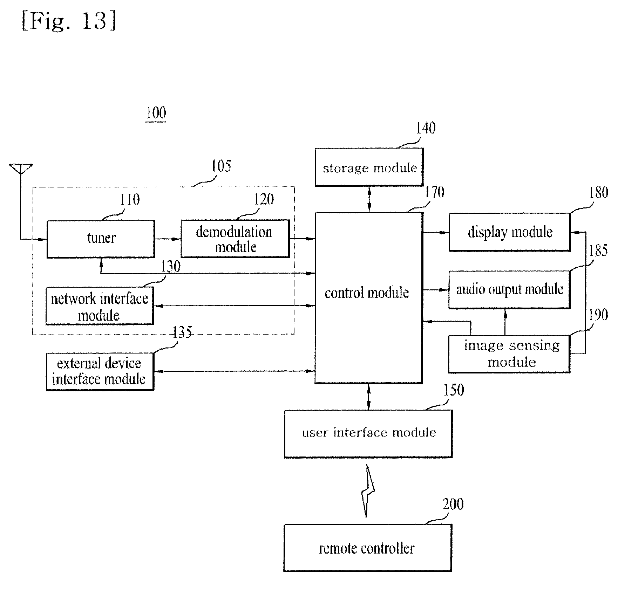

FIG. 13 shows an exemplary detailed view of the multimedia device as shown in FIG. 1 and FIG. 2. The multimedia device (100) shown in FIG. 13 may be connected to a broadcasting network and an Internet network. For example, the multimedia device (100) includes a connected TV, a smart TV, an HBBTV (Hybrid Broad-Band TV), a set-top box, a DVD player, a Blu-ray player, a gaming device, a computer, and so on.

Referring to FIG. 13, the multimedia device (100) may include a broadcast receiving module (105), an external device interface module (135), a storage module (140), a user interface module (150), a controller (170), a display module (180), an audio output module (185), and an image sensing module (190). The broadcast receiving module (105) may include a tuner (110), a demodulator (120), and a network interface module (130).

The broadcast receiving module (105) may be designed so as to be equipped with a tuner (110) and a demodulator (120) and not to include a network interface module (130). Alternatively, the broadcast receiving module (105) may also be designed so as to be equipped with a network interface module (130) and not to include a tuner (110) and a demodulator (120).

Among a plurality of RF (Radio Frequency) broadcast signals being received through an antenna, the tuner (110) selects an RF broadcast signal respective to a channel selected by the user (or viewer) or selects an RF broadcast signal respective to all pre-stored channels. Then, the tuner (110) converts the selected RF broadcast signal to an intermediate frequency (IF) signal or a baseband video or audio signal.

The tuner (110) may also receive single-carrier RF broadcast signals according to an ATSC (Advanced Television System Committee) method or multi-carrier RF broadcast signals according to a DVB (Digital Video Broadcasting) method.

After performing the demodulation and channel-decoding processes, the demodulator (120) may output a stream signal (TS). At this point, the stream signal may correspond to a multiplexed signal having a video signal, an audio signal, or a data signal multiplexed therein. For example, the stream signal may correspond to an MPEG-2 TS (Transport Stream) consisting of an MPEG-2 standard video signal multiplexed with a Dolby AC-3 standard audio signal multiplexed.

The stream signal outputted from the demodulator (120) may be inputted to the controller (170). The controller (170) performs demultiplexing and video/audio signal processing procedures on the inputted stream signal. Thereafter, the controller (170) outputs the image to the display module (180) and outputs the sound to the audio output module (185).

The external device interface module (135) may connect the external device and the multimedia device (100). Also, The external device interface module (135) may be connected to an external device, such as a DVD (Digital Versatile Disk), a Blu ray, a gaming device, an image sensor, a camcorder, a computer (notebook), and so on, through a wired/wireless connection. The external device interface module (135) delivers the image, sound, or data signal being inputted from an outside source through an external device connected to the external device interface module (135) to the controller (170) of the multimedia device (100).

Also, the image, sound, or data signal processed by the controller (170) may be outputted to the connected external device. In order to do so, the external device interface module (135) may include an A/V input/output module (not shown) or a wireless (or radio) communications module (not shown).

The A/V input/output module may include USB terminal, a CVBS (Composite Video Banking Sync) terminal, a component terminal, an S-video terminal (analog), a DVI (Digital Visual Interface) terminal, an HDMI (High Definition Multimedia Interface) terminal, an RGB terminal, a D-SUB terminal, and so on, so as to be able to input audio and video signals of the external device to the multimedia device (100).

The wireless (or radio) communications module is capable of performing close range wireless (or radio) communication with other electronic devices. Based upon the telecommunication standards, such as, for example, Bluetooth, RFID (Radio Frequency Identification), IrDA (Infrared Data Association), UWB (Ultra Wideband), ZigBee, DLNA (Digital Living Network Alliance), and so on, the multimedia device (100) may be connected to other electronic devices via network.

Furthermore, the external device interface module (135) may access diverse set-top boxes via at least one of the above-described terminals, thereby being capable of performing input/output operations with the respective set-top box.

The network interface module (130) provides an interface for connecting the multimedia device (100) to a wired/wireless network including an internet network. In order to provide connection (or access) to a wired network, the network interface module (130) may, for example, be provided with an Ethernet terminal. And, in order to provide connection (or access) to a wireless network, the network interface module may be provided with diverse telecommunication standards, such as, for example, WLAN (Wireless LAN) (Wi-Fi), Wibro (Wireless broadband), Wimax (World Interoperability for Microwave Access), HSDPA (High Speed Downlink Packet Access), and so on.

The network interface module (130) may transmit data to or receive data from another user or from another electronic device through the connected network, or through another network linked to the connected network.

The storage module (140) may store programs for processing and controlling each signal within the controller (170) and may also store signal-processed video, audio or data signals.

Additionally, the storage module (140) may also perform the function of temporarily storing video, audio or data signals that are being inputted from the external device interface module (135) or the network interface module (130). Also, the storage module (140) may store information associated to particular broadcast channels through a channel memory function.

Also, the storage module (140) may store control information for the use gesture recognition performed by the multimedia device and may also store a command language database.

The control information corresponds to information required for combining a plurality of information acquired from an image, when a predetermined image is inputted through an image sensing module (not shown) of the multimedia device. More specifically, when the image sensing module (not shown) includes a plurality of image sensors that can each acquire different types of information, and when the information acquired by each image sensor are combined, the control information may include information on a significance of the information acquired through each image sensor in accordance with a gesture recognition object (hand, foot, head), with which the user inputs a gesture.

Also, the command language database stores mapping data on a specific command corresponding to a user gesture. More specifically, the command language database stores characteristics information of each user gesture, and, in correspondence with the characteristics information, also stores a list of operations executable by the multimedia device, wherein the operations correspond to each set of characteristics information.

Therefore, in case a user gesture is inputted through the image sensing module (not shown), and in case the characteristics information is extracted from the inputted image, the multimedia device may search a specific command corresponding to the characteristics information from the database stored in the storage module (140) and may execute the searched specific command.

For example, the storage module (140) may include a storage medium of at least one of a flash memory type, a hard disk type, a multimedia card micro type, a card type memory (e.g., SD or XD memory, *etc.*), RAM, ROM (EEPROM, *etc.*) type.

Although FIG. 13 shows an example wherein the storage module (140) is provided separately from the controller (170), these features may be combined in other embodiments. The storage module (140) may also be included in the controller (170).

The user interface module (150) either delivers (or sends) a signal inputted by the user to the controller (170) or delivers a signal outputted from the controller (170) to the user.

For example, in accordance with diverse telecommunication methods, such as RF (Radio Frequency) communication, Infrared (IR) communication, and so on, the user interface module (150) receives a control signal, such as power on/off, channel selection, screen settings, and so on, from a remote controlling device (200) and processes the received signal. Alternatively, the user interface module (150) may process a control signal received from the controller (170) so that the corresponding signal can be transmitted to the remote controlling device (200).

Also, for example, the user interface module (150) may deliver a control signal, which is inputted from a local key (not shown), such as a power key, channel key, volume key, set-up values, and so on, to the controller (170).

Also, for example, the user interface module (150) may deliver a control signal that is being inputted from a sensing module (not shown), which senses a user's gesture, to the controller (170), or the user interface module (150) may transmit a signal outputted from the controller (170) to the sensing module (not shown). Herein, the sensing module (not shown) may include a touch sensor, a voice sensor, a position sensor, a motion sensor, and so on.

The controller (170) demultiplexes an inputted stream or processes demultiplexed signals, thereby generating and outputting signals for video or audio output, through the tuner (110) or the demodulator (120) or the external device interface module (135).

A video signal that is image-processed (or video-processed) by the controller (170) is inputted to the display module (180), so that the processed signal can be displayed as an image respective to the corresponding video signal. Also, the video signal that is image-processed (or video-processed) by the controller (170) may be inputted to an external output device through the external device interface module (135).

The audio signal being processed by the controller (170) may be audio outputted to the audio output module (185). Also, the audio signal being processed by the controller (170) may be inputted to an external output device through the external device interface module (135).

The display module (180) respectively converts the video (or image) signal, data signal, and OSD signal processed by the controller (170), or the video (or image) signal, data signal, and so on being received by the external device interface module (135) to R, G, and B signal, thereby generating a drive signal.

In order to detect the gesture of the user, as described above, a sensing module (190), which is equipped with at least one of a touch sensor, a sound sensor, a position sensor, and a motion sensor, may be further provided in the multimedia device (100). A signal detected by the sensing module (not shown) may be delivered to the controller (170) through the user interface module (150).

Meanwhile, an image sensing module (190) recording (or detecting) the user may also be further included. The image information recorded (or detected) by the image sensing module (190) may be inputted to the controller (170).

The image sensing module (190) may be configured by including a plurality of image sensors each being capable of acquiring difference types of information. And, this will be described in detail on with reference to FIG. 9.

The controller (170) may use each of the image recorded by the image sensing module (190) or the signal detected from the sensing module (not shown), individually or in combination, in order to detect (or sense) the gesture of the user.

In order to do so, the controller (170) may include an image processing module (190), and the image processing module may combine information acquired from an image recorded (or detected) through at least one or more image sensors of the image sensing module (190).

Also, when the image recorded by the image sensing module (190) is inputted, the controller (170) loads control information for combining the detected image from the storage module (140), and, based upon the loaded control information, the combination of the image processing module is controlled. Moreover, a specific command corresponding to the combined information is searched from the storage module (140), the control operations may be performed so that the searched specific command can be executed.

The remote controlling device (200) transmits a user input to the user interface module (150). In order to do so, the remote controlling device (200) may use the Bluetooth, RF (Radio Frequency) communications, IR (Infrared) communications, UWB (Ultra Wideband), ZigBee methods.

Also, the remote controlling device (200) receives audio, video or data signals outputted from the user interface module (150), thereby being capable of displaying the received signals or outputting sound or oscillation (or vibration) from the remote controlling device (200).

The above-described multimedia device (100), as a fixed type, may correspond to a digital broadcast receiver that can receive at least one of ATSC type (8-VSB type) digital broadcast programs, DVB-T type (COFDM type) digital broadcast programs, ISDB-T type (BST-OFDM type) digital broadcast programs, and so on.

Meanwhile, the block view of the multimedia device (100) shown in FIG. 13 corresponds to a block view for showing an example according to an embodiment of the present invention. Each element of the block view may be integrated, added, or omitted, in accordance with the specification of the multimedia device (100) that is actually being realized. More specifically, when required, 2 or more elements may be combined to a single element, or one element may be segmented to 2 or more elements. Also, the functions being performed in each block are merely exemplary functions and not intended to be limiting.

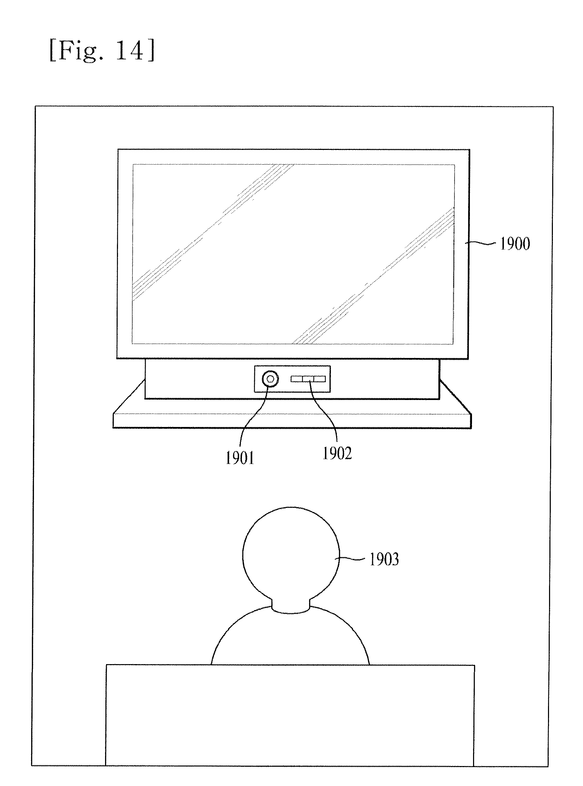

FIG. 14 shows a user and a multimedia device according to one embodiment. In order to gain the distance information of the user (1903), the multimedia device (1900) acquires a user image through the image sensing modules (1901, 1902) of the multimedia device.

Also, in order to accurately recognize the distance information of the user, the image sensing module may be configured of two image sensor modules (1901, 1902), wherein each image sensor module acquires a different type of information. More specifically, according to one embodiment, the image sensing module may include a depth image sensor and an RGB image sensor.

Also, as shown in the drawing, the image sensing modules (1901, 1902) of the multimedia device (1900) are positioned at a lower portion of the multimedia device, and may be used to easily detect the bodily center of the user, and being relatively less influenced by the illumination condition (or environment), the image sensing modules may easily perform gesture recognition.

According to the above-described configuration, the multimedia device acquires information on the user's characteristics information and distance information, thereby being capable of providing a controlling environment (or control condition) of the multimedia device suitable to the characteristics and position of the user in accordance with the acquired information. The characteristics information may include facial information, skeletal information, and color information for recognizing the user or the user's gesture)

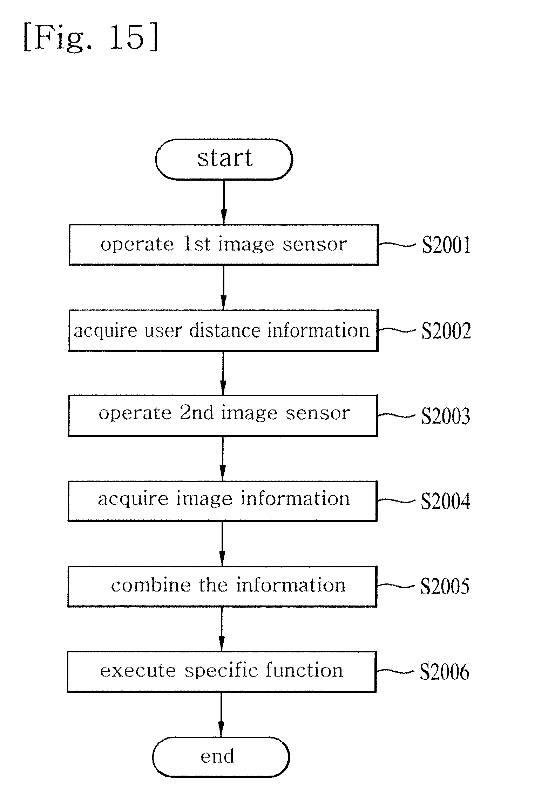

FIG. 15 shows one embodiment of a method of recognizing gestures in a multimedia device. In case the multimedia device seeks to recognize a user gesture, a first image sensor is operated (S2001), and the image inputted through the first image sensor is analyzed so that distance information of the user can be acquired (S2002).

According to this embodiment, the first image sensor may correspond to the depth image sensor, which can acquire distance information of an object through an image from the image sensor. Also, the skeletal information of the user may also be acquired along with the distance information of the user through the depth image sensor.

According to this embodiment, distance information of the user and coordinates information of at least one body part are first acquired through the first image sensor. Then, since color information may be acquired through a second image sensor based upon the acquired information, the accuracy and swiftness in the operation of the second image sensor may be enhanced.

Subsequently, based upon the distance information acquired through the first image sensor, the second image sensor is operated (S2003), and the image inputted through the second image sensor is analyzed so that image information can be acquired (S2004).

The second image sensor may correspond to the RGB image sensor, which can acquire color information of the object through an image. The RGB image sensor may acquire a high resolution image, thereby being capable of recognizing in detail the image for recognizing the user's gesture. Conversely, in case the RGB image sensor recognizes all images of the image being recognized through the RGB image sensor, a problem of having the processing rate decreased may occur.

Therefore, based upon the distance information acquired through the first image sensor, a part of the user's bo9dy may be zoomed (or enlarged) so that a high resolution image of the corresponding body part can be acquired.

Also, when the second image sensor receives the distance information acquired through the first image sensor, the second image sensor recognizes the object by using the distance information acquired through the first image sensor. And, in case the object is moving, the movement of the object may be tracked.

However, when the movement of the user goes beyond the range of recognition of the second image sensor, and when the tracking of the second image sensor is ended, distance information and coordinates information are acquired once again (or reacquired) through the first image sensor. And, the second image sensor may continue to track the object by using the reacquired distance information and coordinates information.

Thereafter, the distance information and the color information acquired from the first image sensor and the second image sensor are combined (S2005).

According to this embodiment, based upon the control information stored in the multimedia device, the significance of the distance information and the color information may be determined, and the distance information and the color information may be combined in accordance with the determined significance. Also, the control information may be decided based upon the distance between the user and the multimedia device or based upon the size of the body part inputting the user gesture.

More specifically, the control information may include the image detected (or recorded) by the first image sensor of the multimedia device, and data for deciding the significance of the image detected (or recorded) by the second image sensor.

For example, since the first image sensor may correspond to a depth image sensor, the user position or skeletal information of the user's body may be acquired. However, the first image sensor cannot acquire the color information or the high resolution information. And, since the second image sensor may correspond to an RGB image sensor, the color information or the high resolution information may be acquired. However, the second image sensor cannot acquire image information of the object that is in movement. And, since the second image sensor has a slow processing speed, the images taken from each image sensor may be combined, thereby being capable of performing accurate gesture recognition.

Therefore, by combining the distance information being acquired through the first image sensor and the color information being acquired through the second image sensor, the characteristics information can be easily acquired.

Also, depending upon the distance between the multimedia device and the user, the significance is varied for each combination. Thus, more accurate gesture recognition may be performed. For example, when the distance becomes shorter (or closer), if the ratio of acquiring a high resolution image through the RGB image sensor may be increased, and, when the distance becomes longer (or further), the depth image sensor may be used, so that the user distance information can be noted from the background.

Also, control information respective to the size of the object, and not the distance of the object, may also be stored. More specifically, as the object becomes smaller, since a problem of having difficulty in recognizing a gesture through the depth image sensor may occur, when the size information of the object is searched through the first image sensor, as the searched size information becomes smaller, control information increasing the significance of the RGB image sensor, when combining the image, may be stored in the database.

Also, according to the embodiment, the control information may include the significance of the image detected through the first image sensor and the second image sensor, and the control information may also include filtering information of the image and zooming information.

Subsequently, based upon the combined information, a specific command based upon the combined information is executed from the multimedia device (S2006). More specifically, by inputting a predetermined gesture to the multimedia device through the first image sensor and/or the second image sensor of the multimedia device, the user may enable a desired operation to be performed.

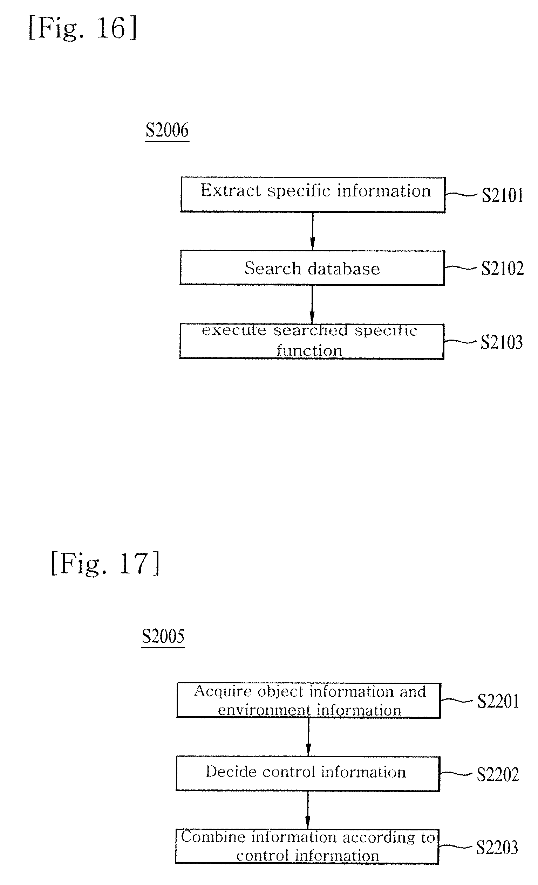

FIG. 16 shows a flow chart describing in detail the step of performing specific commands of FIG. 15. When combining the information acquired from the first image sensor and the second image sensor in step (S2005), the multimedia device extracts characteristics information enabling multimedia device to perform a predetermined operation from the combined information (S2101).

More specifically, by evaluating the quality of the images acquired through the first image sensor and the second image sensor, the multimedia device decides whether or not to use the acquired images. Then, after regulating the acquired images through the image processing module, the multimedia device performed the process of extracting characteristics information.

As information used for differentiating a gesture being inputted through the first image sensor and the second image sensor from another gesture, the extracted characteristics information may include information on a distance between each body part and information on an inclination angle, which can be acquired through the first image sensor, and the extracted characteristics information may also include information on color and information on color dispersion, which can be acquired through the second image sensor.

Subsequently, the multimedia device searches the database of the multimedia device based upon the extracted characteristics information. The database stores mapping data of gestures pre-stored in the multimedia device and mapping data of specific commands, and the database also stores mapping data of gestures randomly set-up by the user and mapping data of specific commands.

Therefore, depending upon the extracted characteristics information, the multimedia device searches a specific command corresponding to the characteristics information from the database.

Also, based upon the searched result, if a corresponding specific command does not exist, the multimedia device does not perform any operations or may output an error message. And, if a corresponding specific command exists, the multimedia device may perform the corresponding specific command or may request a verification command as to whether or not the specific command is to be performed (S2103).

After undergoing the above-described process of performing specific commands, the user may enable the multimedia device to perform desired operations via gesture input.

FIG. 17 shows a flow chart describing the step of combining distance information and image information of FIG. 15. According to this embodiment, the first image sensor of the multimedia device may include a depth image sensor, and the second image sensor of the multimedia device may include an RGB image sensor.

Herein, although the depth image sensor is convenient for acquiring distance information of the object, since the depth image sensor cannot acquire high resolution information, there are limitations in analyzing the detected image in detail. Furthermore, although the RGB image sensor can acquire high resolution images, the processing speed is too slow. Therefore, by combining the information acquired from both the first image sensor and the second image sensor, accuracy in gesture recognition may be enhanced.

Also, when considering the characteristics of the first image sensor and the second image sensor, the significance of the combined information may be varied depending upon the distance between the user and the multimedia device, or the size of the object performing gesture input. Therefore, when a predetermined gesture is inputted to the multimedia device, information on the object and the distance information may be acquired from the inputted image (S2201).

Also, when the object information and distance information are acquired, control information corresponding to the acquired information is searched and decided (S2202).

Based upon the acquired information, the multimedia device may search the database stored in the multimedia device so as to decide the control information.

The control information has already been described in step (S2005) of FIG. 15. According to one embodiment, the control information may include a significance of the image detected through the first image sensor and the second image sensor, and the control information may also include filtering information of the image and zooming information.

Therefore, depending upon the above-described control information, and, according to the distance between the user and the multimedia device, or according to the distance of the object, the multimedia device may differently combine the images taken from the first image sensor and the second image sensor, so that gesture recognition can be realized more easily.

Subsequently, the multimedia device combines the information acquired through the first image sensor and the information acquired through the second image sensor in accordance with the decided control information (S2203).

More specifically, when information is acquired from each of the first image sensor and the second image sensor, the acquired information may be combined in accordance with the control information, so as to extract characteristics information of the inputted user gesture.

Accordingly, since a specific command corresponding to the characteristics information may be performed through the extracted characteristics information, the user may be capable of performing the gesture recognition process more easily.

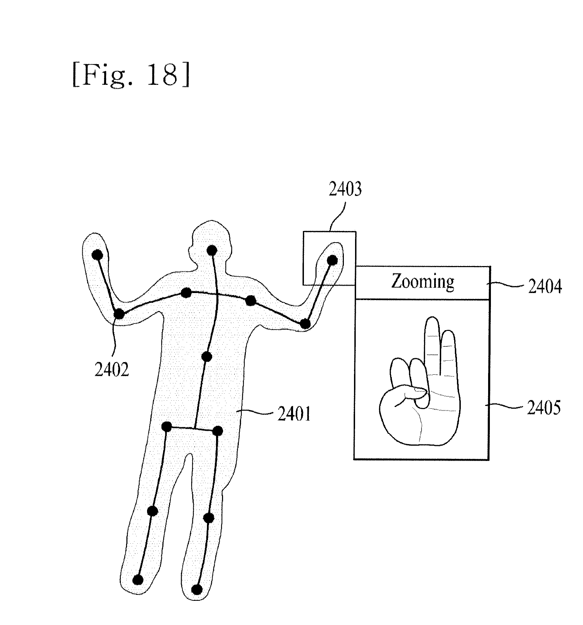

FIG. 18 shows a display screen including a menu for recognizing a gesture. According to this embodiment, the multimedia device may display an image (2401) of a depth image sensor recognizing the skeletal information of the user, according to the embodiment of the present invention, and may also display an enlarged (or zoomed) image (2405) of a body part of the user inputting the gesture, which is zoomed through the RGB image sensor..

Referring to FIG. 18, the multimedia device may acquire coordinates information on each body part of the user through the image (2401) taken from the depth image sensor. More specifically, for example, coordinates information respective to only a right elbow (2402) of the user, among the many body parts of the user, may be acquired.

Also, accordingly, in case the user seeks to input a predetermined gesture by using only a portion (2403) of the user's body, the coordinates information of the corresponding body part may be acquired, and the area where the corresponding body part is located in zoomed through the RGB image sensor, so that a more detailed and enlarged image (2405) can be recognized.

Also, when the user performs a specific motion by moving his or her body, the position shift of the skeletal information is detected, thereby enabling the motion of the user to be recognized.

Also, by using the zoomed image (2405) included in the zooming menu (2404), the user may verify whether or not the gesture currently being inputted is being safely inputted. Therefore, malfunction respective to the gesture recognition of the multimedia device may be prevented.

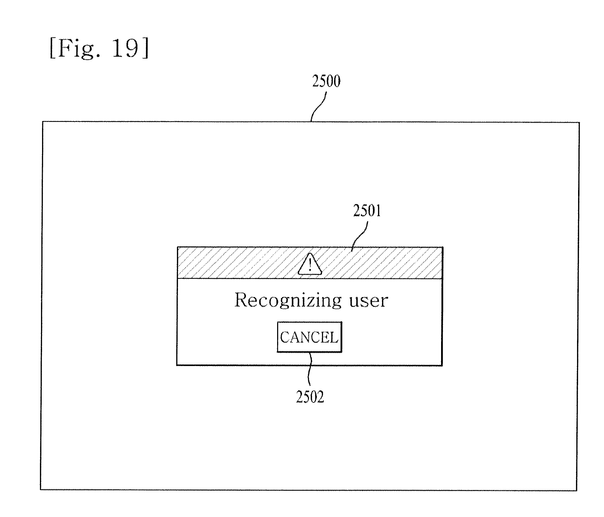

FIG. 19 shows an embodiment of a display screen (2500) including a notification message. According to this embodiment, the multimedia device displays a notification message (2501), so as to notify that the user's gesture is currently being recognized by the multimedia device.

According to the embodiment, the multimedia device acquires user coordinates information through the first image sensor. And, accordingly, any error that may occur with respect to the acquisition of the user coordinates information may be decreased by using the notification message (2501).

The notification message (2501) may include a message notifying that the multimedia device is currently acquiring user coordinates information, and may also include a cancel menu item (2502).

When the acquisition of the user coordinates information performed by the multimedia device is completed, the notification message (2501) automatically disappears, and the user may select the cancel menu item (2502) in order to cancel the position recognition process.

Also, in order to prevent the display screen of a content or service, which is currently being used in the multimedia device, from being interrupted, the notification message (2501) may be displayed in a predetermined area where the content or service is not being displayed, or the notification message (2501) may be displayed in semi-transparent colors.

Accordingly, when the user seeks to perform gesture input to the multimedia device, the user may easily perform the gesture input process by maintaining a consistent user position.

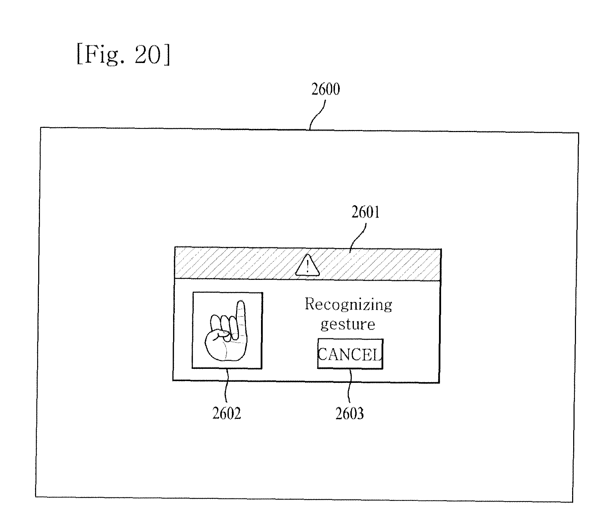

FIG. 20 shows a display screen (2600) including an image of a gesture that is being recognized according to one embodiment. According to this embodiment, the multimedia device displays a notification message (2601) so as to notify that a specific command corresponding to the user gesture inputted to the multimedia device is being searched.

Also, the notification message (2601) may display an image (2602) being inputted through the multimedia device so as to recognize a gesture and a cancel item (2603) for cancelling the recognition process.

The notification message (2601) may include a message notifying that a specific command corresponding to the user gesture inputted to the multimedia device is being searched.

Also, the image (2602) may correspond to a still image or a moving picture image. And, from the image being inputted through the image sensing module of the multimedia device, only a portion of the image for recognizing the gesture may be zoomed and displayed.

When a select signal of the cancel item (2603) is received from the user, the multimedia device cancels the search process of the specific operation, and the display screen returns to the screen prior to displaying the notification message (2601).

Also, in order to prevent the display screen of a content or service, which is currently being used in the multimedia device, from being interrupted, the notification message (2601) may be displayed in a predetermined area where the content or service is not being displayed, or the notification message (2601) may be displayed in semi-transparent colors.

Accordingly, when the user may be capable of being aware that the specific command corresponding to the user gesture inputted to the multimedia device is currently being searched, and the user may verify the gesture image that is being recognized, thereby being capable of performing a more accurate operation.

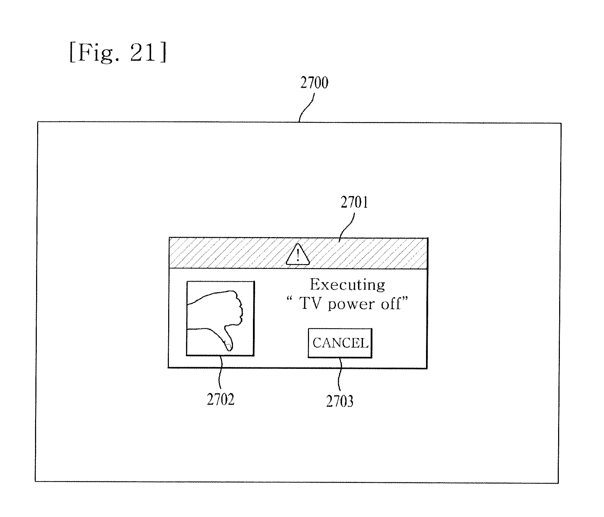

FIG. 21 shows a display screen including a warning message. According to the embodiment, when a predetermined gesture is inputted from the user, and when a specific operation corresponding to the gesture is being performed, a verification message (2701) respective to whether or not the specific operation is to be performed is displayed.

Most particularly, in case the specific operation corresponds to an operation that may bring about a data loss with respect to a content or service that is being used in the multimedia device, the data loss may be prevented by displaying the verification message (2701).

For example, in case the specific command corresponding to the inputted gesture corresponds to an operation of turning the power of the multimedia device OFF, and when the power of the multimedia device is turned off, all operations currently being performed by the multimedia device are also terminated. Therefore, by displaying the menu (2701), the multimedia device may request the user for a verification command as to whether or not the power of the multimedia device is to be turned off.

Also, the verification message (2701) may include information on the specific operation, information (2702) on the gesture inputted by the user, and a cancel menu item (2703) for cancelling the gesture input process.

More specifically, in case the user verifies the inputted gesture (2702) and the specific operation, and in case the user seeks to cancel the performance of the specific operation, the user may select the cancel item (2703) so as to cancel the specific operation.

Also, in order to prevent the display screen of a content or service, which is currently being used in the multimedia device, from being interrupted, the verification message (2701) may be displayed in a predetermined area where the content or service is not being displayed, or the verification message (2701) may be displayed in semi-transparent colors.

Accordingly, when the gesture inputted to the multimedia device is erroneously recognized, or when the gesture is erroneously inputted, the performance of an unintended operation may be prevented.

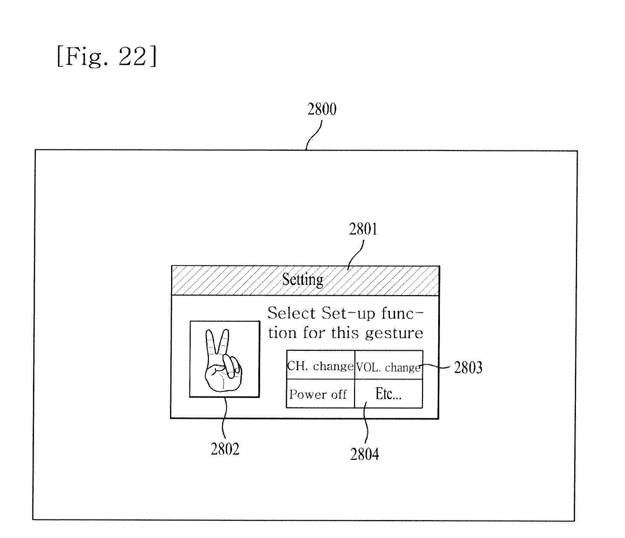

FIG. 22 shows one embodiment of a display screen (2800) including a gesture mapping menu. According to this embodiment, the user may set-up a random gesture as an input means for executing a predetermined function in the multimedia device or for being provided with a service.

Referring to FIG. 22, in case the user inputs a select signal of a predetermined menu item for setting-up the random gesture, or in case the user inputs a Hot Key input signal to the multimedia device, a gesture registration menu (2801) may be displayed.

The gesture registration menu (2801) may include a gesture (2802) inputted by the user for setting up the gesture as the input means, and a function list (2803) of the multimedia device that is to be mapped with the inputted gesture.

Also, the gesture registration menu (2801) may include a list of functions or services that are frequently used by the user, who has inputted the gesture, in the function list (2803) and may display the function list (2803). And, the gesture registration menu (2801) may also include a menu item (2804) for selecting a function or service that does not exist in the list.

The user may input a random gesture through the menu (2801) and may map the inputted gesture to a predetermined function or service of the multimedia device, thereby storing the mapped information in the database.

Accordingly, by designating a desired function or service to a desired gesture, the user's convenience in manipulating the multimedia device may be enhanced.

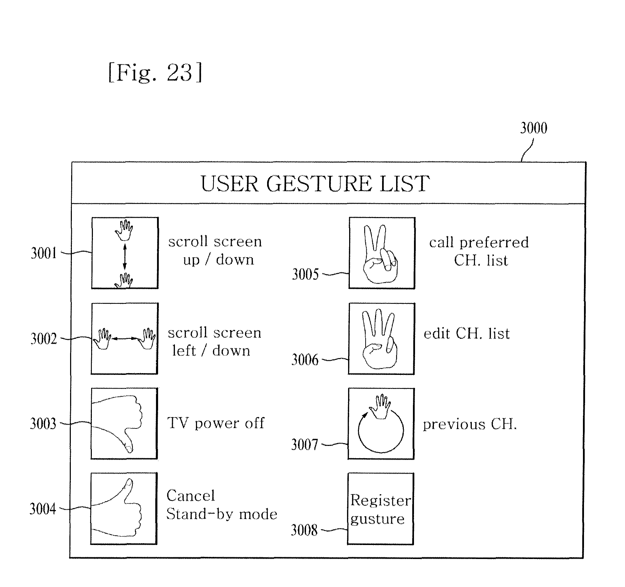

FIG. 23 shows a display screen (3000) including a user gesture list.According to this embodiment, by using the user gesture list, the multimedia device may provide the user with mapping information of the user gesture stored in the multimedia device and the specific command.

More specifically, for each user gesture, the multimedia device may map and store a specific command that can be executed by the multimedia device. And, when a user gesture is inputted through the image sensing module of the multimedia device, the characteristics information of the inputted user gesture is extracted, and the stored mapping data are searched, thereby enabling the searched specific command to be executed.

The user gesture list may include information on the mapped user gesture as an image, and may also include information on the mapped specific command as an image or a text.

Therefore, referring to FIG. 23, when the user gesture corresponds to a gesture moving the hand up or down, the gesture may be recognized as a command (3001) for scrolling the display screen of the multimedia device upwards or downwards. And, when the user gesture corresponds to a gesture moving the hand to the left side or to the right side, the gesture may be recognized as a command (3002) for scrolling the display screen of the multimedia device leftwards or rightwards.

When the user gesture corresponds to a gesture pointing the thumb downwards, the gesture may be recognized as a command (3003) for turning the power of the multimedia device off. And, when the user gesture corresponds to a gesture pointing the thumb upwards, the gesture may be recognized as a command (3004) for cancelling a stand-by state of the multimedia device. And, when the user gesture corresponds to a gesture extending two fingers, the gesture may be recognized as a command (3005) for calling a preferred channel list.

When the user gesture corresponds to a gesture extending three fingers, the gesture may be recognized as a command (3006) for editing a channel list. And, when the user gesture corresponds to a gesture drawing a circle, the gesture may be recognized as a command (3007) for returning to the previous channel.

Also, in addition to gestures made with the hand or one or more fingers, the user gesture may also include diverse gestures made with diverse body parts, such as the arms, legs, head, and so on.

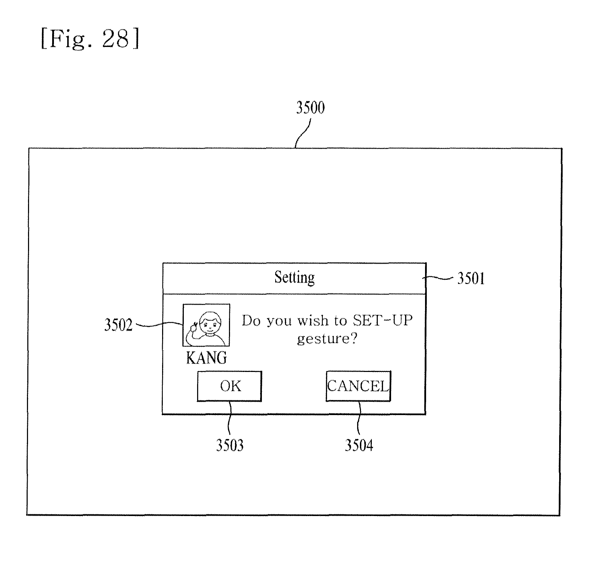

Also, the user gesture list may include a menu item (3008) for registering a new user gesture. Accordingly, when a select signal of the menu item (3008) is received from the user, the multimedia device displays a menu screen of FIG. 22 or a menu screen of FIG. 28 shown below, thereby being capable of performing a procedure for registering user gestures.

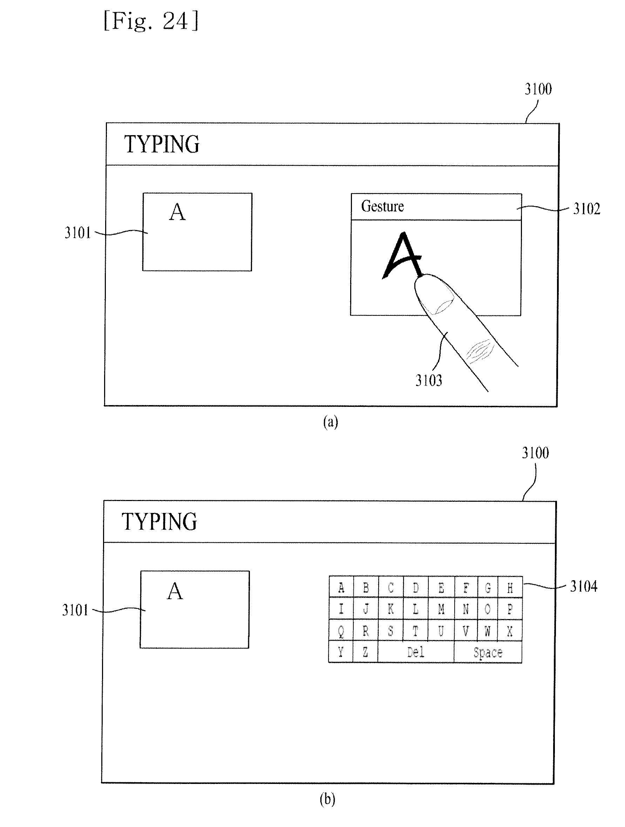

FIG. 24 shows one embodiment of a display screen performing letter (or character) input via user gesture. According to this embodiment, since the multimedia device can accurately recognize a user gesture, the multimedia device displays a letter (or character) input menu (3100), as shown in FIG. 24, thereby being capable of receiving a character or letter through the user gesture.

According to this embodiment, the letter input menu (3100) may include a letter input window (3101). And, since the letter input window (3101) displays the letter being inputted through the user gesture, the user may recognize whether or not an accurate letter input is being performed by referring to the letter input window (3101).

Also, as shown in FIG. 24(a), a letter respective to a user gesture may be received through a trajectory recognition mode. More specifically, the multimedia device may recognize a position of the user's finger through the image sensing module of the multimedia device, and the multimedia device may track the finger position and may also recognize the trajectory drawn by the user's finger. The multimedia device may also include a finger image (3103) indicating the position of the user's finger, and a trajectory window (3102) displaying the recognized trajectory.

Therefore, by inputting a letter matching with the shape of the trajectory made by the user's finger to the letter input window (3101), the letter input may be performed through the user gesture.

FIG. 24 shows one embodiment of a display screen for changing a user gesture input mode. According to this embodiment, in receiving a user gesture through the user's finger, the multimedia device may recognize the inputted user gesture through the trajectory recognition mode and/or a pointing recognition mode.

The trajectory recognition mode corresponds to a mode, wherein the multimedia device tracks position shift of the user's finger and extracts characteristics information respective to a movement path of the user's finger, thereby performing an operation corresponding to the extracted characteristics information. Herein, the letter inputting method shown in FIG. 24(a) corresponds to an operation performed in the trajectory recognition mode.

Also, the pointing recognition mode corresponds to a mode, wherein the multimedia device acquires distance information of the user's finger, and, when a pointing movement of the user's finger is inputted, the multimedia device extracts characteristics information respective to the pointed position, thereby performing an operation corresponding to the extracted characteristics information. Herein, the letter inputting method shown in FIG. 24(b) corresponds to an operation performed in the pointing recognition mode.

Therefore, by using a change recognition mode menu (3401), the multimedia device may change the trajectory recognition mode and the pointing recognition mode.

The change recognition mode menu (3401) may include information (3402) on the currently set-up recognition mode. And, a command for changing the recognition mode may be received.

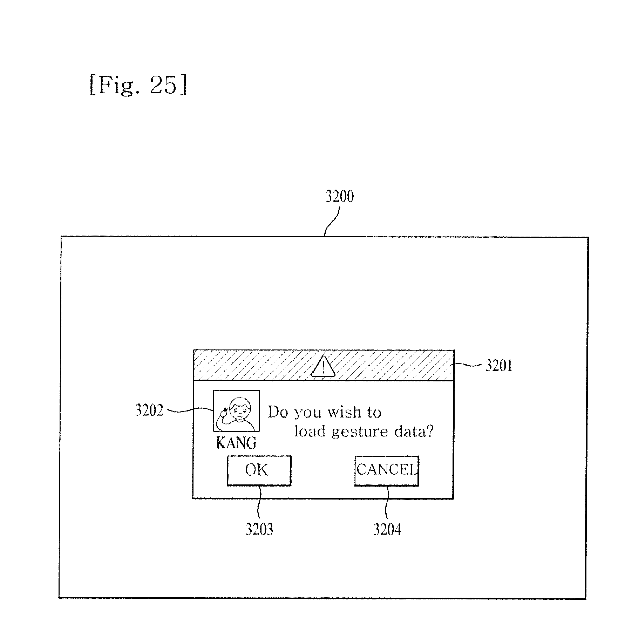

The command for changing the recognition mode may be inputted in diverse formats. For example, as shown in FIG. 25, when the multimedia device inputs a constant trajectory by using his or her finger (3403), while currently being set to the pointing recognition mode, the multimedia device recognizes the inputted trajectory as a user gesture for changing the recognition mode. Accordingly, the multimedia device may change the user gesture input mode of the multimedia device from the pointing recognition mode to the trajectory recognition mode.

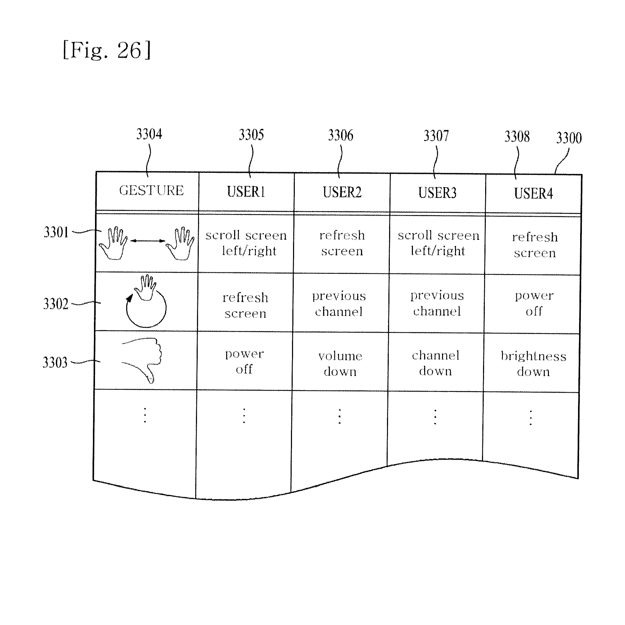

FIG. 26 shows one embodiment of a database (3300) for user gestures. According to this embodiment, since multiple users may use a single multimedia device, the multimedia device may store mapping data respective to a user gesture (3304) of each user.

Referring to FIG. 26, for example, when 4 users are registers as the users of the multimedia device (3305, 3306, 3307, 3308), the specific command corresponding to each user gesture (3301, 3302, 3303) of each user may be differently determined and stored.

More specifically, even when a same user gesture of drawing a circle with the hand is inputted, when user USER1 inputs the gesture, the multimedia device performs the operation of updating (or upgrading) a screen that is being displayed in the current multimedia device. And, when user USER2 inputs the same gesture, the multimedia device may perform the operation of returning to the previous channel.

Accordingly, even when multiple users share the same multimedia device, individualized user gesture may be set-up for each user, thereby enhancing the user's convenience.

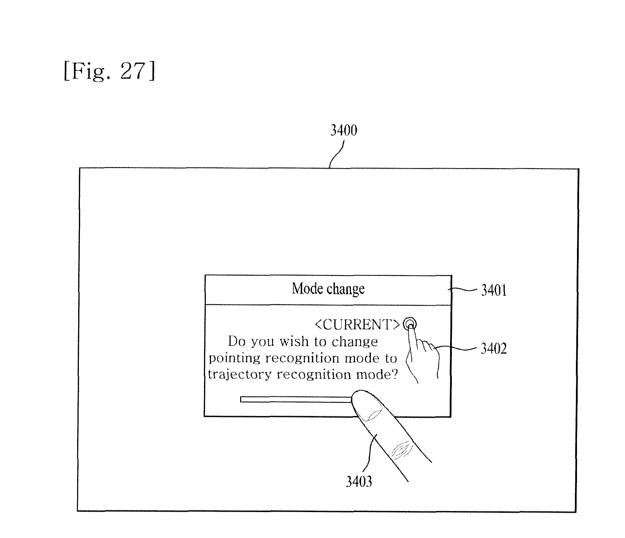

FIG. 27 shows a display screen (3200) including a load menu loading gesture data for a plurality of users. As shown, since different user gesture mapping data may be stored for each separate user, when a user is recognized through the image sensing module of the multimedia device, the multimedia device may load the user gesture data respective to the recognized user.

More specifically, when a signal for beginning (or initiating) user gesture recognition, the multimedia device recognizes the corresponding user through the image sensing module of the multimedia device, and the multimedia device may display a load user gesture data menu (3201) in accordance with the recognized user.

The load menu (3201) may include information (3202) on the recognized user as image data or as a user ID of the user.

Also, when the load menu (3201) is displayed, the user may determine whether or not the recognized user is correct, by referring to the user information (3202). Then, based upon the determined result, if the user recognition is correct, the user may input a select signal of a verification menu item (3203), so as to load user gesture data of the recognized user, thereby being capable of recognizing the user gesture of the recognized user.

Conversely, in case the recognized user is verified to be incorrect, by using the user information (3202), the user may input a select signal of a cancel menu item (3204), so that the multimedia device can perform an operation for re-recognizing the user.

FIG. 28 shows a display screen (3500) including a user-specific user gesture set-up menu. As shown, since different user gesture mapping data may be stored for each separate user, the multimedia device may input a user gesture through the image sensing module of the multimedia device. And, in performing the process of mapping a specific command to the inputted user gesture, a different mapping process may be performed for each separate user, each user being recognized through the image sensing module of the multimedia device.

More specifically, when a signal for registering a user gesture is received, the multimedia device may recognize the corresponding user through the image sensing module of the multimedia device, and the multimedia device may then display a user gesture set-up menu (3501) with respect to the recognized user.

The set-up menu (3501) may include information (3502) on the recognized user as image data or as a user ID of the user.

Also, when the set-up menu (3501) is displayed, the user may determine whether or not the recognized user is correct, by referring to the user information (3502). Then, based upon the determined result, if the user recognition is correct, the user may input a select signal of a verification menu item (3503), so as to perform an operation for updating the mapping data for the user gesture to the user gesture data of the recognized user.

Conversely, in case the recognized user is verified to be incorrect, by using the user information (3502), the user may input a select signal of a cancel menu item (3504), so that the multimedia device can perform an operation for re-recognizing the user.

The application of the above-described configuration and method of the embodiment of the present invention will not be limited only to the multimedia device and the method of operating the same according to the present invention. In order to allow a wide range of variations of the above-described embodiments of the present invention to be made, each of the embodiments of the present invention may selectively (or optionally) be entirely or partially combined and configured.

Meanwhile, the method of operating the multimedia device according to the present invention may be realized as a code that can be read by a processor provided in the multimedia device in a recording medium that can be read by a processor. The recording medium that can be read by the processor includes all types of recording devices storing data that can be read by the processor. Examples of the recording media that can be read by a processor may include ROMs, RAMs, CD-ROMs, magnetic tapes, floppy disks, optical data storing devices, and so on.

Also, an exemplary recording medium being realized in the form of a carrier wave, such as a transmission via Internet, may also be included. Also, the recording medium that can be read by a processor may be scattered within a computer system, which is connected through a network. And, a code that can be read by the processor may be stored and executed by using a dispersion (or scattering) method.

Another embodiment may apply to a gaming context. For example, the first and second image sensors of the display device may recognize various gestures or motions made by a user, and then the processor may interpret these motions or gestures to correspond to specific commands or input values. These commands and/or values may then be used as a basis for controlling a function in a game application operating on the display device, and corresponding changes may appear, for example, in the game as various gaming screens are displayed.

Another embodiment may include automatically executing an application or program upon recognition of a specific user. The application may be virtually any application including but not limited to a scheduling or calendar application, a photo album application, e-mail application corresponding to that user's e-mail account, an instant messaging application, automatic execution or access to a social networking, video chat, financial, investment, webcam, or other type of website, automatic access to a predetermined web browser, as well as other internet or application-based functions.

The aforementioned webcam may be remotely located from the display device or directed connected thereto. If remotely located, the display device may access and display webcam video based on recognition of a specific user. Data may be stored in a database included in or accessed by the display device linking the recognition of each of a plurality of user's to respective applications and/or programs.

Another embodiment involves controlling the movement, appearance, or other action in the screen of a video game or other game application based on poses recognized by the sensors and processor of the multimedia system.

One or more embodiments described herein provide a multimedia device and a method for operating the same that can increase the accuracy in performing user gesture recognition, thereby enhancing the convenience in usage.

One or more embodiments described herein also provide a multimedia device and a method for operating the same that can provide diverse user interfaces to ensure accuracy in the user recognition function.

According to one embodiment, a method of recognizing a user gesture of a multimedia device includes the steps of acquiring user distance information through a first image sensor; acquiring image information based upon the distance information through a second image sensor; deciding control information of the distance information and the image information; combining the distance information and the image information, based upon the control information, and searching for a specific command corresponding to the combined information; and performing the searched specific command.

According to another embodiment, a multimedia device includes a first image sensor acquiring user distance information; a second image sensor acquiring image information based upon the distance information; an image processing module combining the distance information and the image information through the first image sensor and the second image sensor; a storage module storing a list of specific commands corresponding to the information combined though the image processing module and storing control information of the distance information and the image information; and a controller controlling the combination of the image processing module based upon the control information, searching for a specific command corresponding to the combined information through the storage module, and controlling the multimedia device so that the searched specific command can be executed.

According to one embodiment, by accurately recognizing the user gesture from the multimedia device, so as to perform the necessary operations, the user may be capable of manipulate the multimedia device with accuracy and speed.

According to another embodiment, during the process of recognizing the user gesture from the multimedia device, the present invention may provide a variety of user interfaces, thereby enhancing the convenience in usage for the user.

A multimedia device as described herein corresponds to various types of devices that receive and process broadcast data, for example. Moreover, the multimedia device may correspond to a connected TV. The connected TV may be provided with, for example, a wire and wireless communication device in addition to a broadcasting receiving function. Accordingly, the connected TV may be provided with a more convenient interface such as a manual input module, a touch screen or a motion recognition remote controller.

Also, the connected TV enables e-mailing, web browsing, banking or games by accessing Internet or computer in accordance with the support of wire or wireless Internet function. For these various functions, a standardized general-purpose operating system (OS) can be used.

Accordingly, since the connected TV can freely be provided with or delete various applications on a general-purpose OS kernel, it may perform user-friendly various functions. More detailed examples of the connected TV include a web TV, an Internet TV, an HBBTV, a smart TV, and a DTV. The connected TV may be applied to a smart phone as the case may be.

According to another embodiment, a display device comprises a first sensor to acquire a first image of a person; a second sensor to acquire a second image of the person; a storage device to store first information and second information, the first information identifying a plurality of gestures mapped to respective ones of a plurality of functions identified by the second information; and a processor to recognize a gesture of the person based on the first and second images, and to perform a function corresponding to the recognized gesture based on the first and second information stored in the storage device, wherein: the second image is detected based on the first image, the functions are different ones of the display device, and the gestures are made with at least one body part of the person captured in the second image.

The processor may determine coordinate information of the person in the first image and extract the gesture of the person in the second image based on the coordinate information. The coordinate information may include distance information. In addition, the first sensor may be a depth image sensor and the second sensor may be a color image sensor.

The second image includes a zoomed view of the at least one body part, and the recognized gesture may correspond to an orientation of the at least one body part. Also, the second image may be a higher resolution image than the first image.

In addition, the processor may form combined information based on the first and second images, and recognize the gesture based on the combined information. When the body part is in motion, information from the first and second sensors are combined to recognize the gesture, the information from the first sensor including distance information and the information from the second sensor including color information.

Also, the second sensor may track movement of the at least one body part based on information from the first sensor, and the gesture may correspond to the trace of a letter in air and wherein the at least one body part is a finger or hand used to trace the letter.

In addition, the display device may include a storage device to store information identifying a plurality of gestures for each of a plurality of users, each of the plurality of gestures corresponds to a different one of the functions and wherein one or more functions mapped to the gestures of a first user are different from one or more functions mapped to the same gestures of the second user.

In accordance with another embodiment, a display device, comprises a first sensor to acquire a first image of a person; a second sensor to acquire a second image of the person; a storage device to store first information and second information, the first information identifying a plurality of gestures mapped to respective ones of a plurality of functions identified by the second information; and a processor to perform a function based on the first and second images.

In a first mode, the processor recognizes a gesture of the person based on the first and second images, and to perform a function corresponding to the recognized gesture based on the first and second information stored in the storage device. In a second mode, the processor recognizes a trajectory of a body part moved by a user, the processor recognizing movement of the body part as a letter or number based on the first and second images, the processor to perform a function corresponding to the recognized movement. The second image may be detected based on the first image and the functions are different ones of the display device.

In addition, the first sensor may be a depth image sensor and the second sensor may be a color image sensor. Also, in the first mode, the processor determines coordinate information of the person in the first image and extracts the gesture of the person in the second image based on the coordinate information. The coordinate information includes distance information. The second image may include a zoomed view of the at least one body part.

In accordance with another embodiment, a control method comprises storing first information and second information, the first information identifying a plurality of gestures mapped to respective ones of a plurality of functions identified by the second information; and detecting a first image of a person; detecting a second image of the person; recognizing a gesture of the person based on the first and second images; and performing a function corresponding to the recognized gesture based on the first and second information, wherein the second image is detected based on the first image, the functions are different ones of a display device, and the gestures are made with at least one body part of the person captured in the second image.

The recognizing operation may include determining coordinate information of the person in the first image, and extracting the gesture of the person in the second image based on the coordinate information. The coordinate information may include distance information.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. The features of one embodiment may be combined with the features of the other embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device, comprising:
a first sensor to acquire a first image of a person;
a second sensor to acquire a second image of the person;
a storage device to store first information and second information, the first information identifying a plurality of gestures mapped to respective ones of a plurality of functions identified by the second information; and
a processor to recognize a gesture of the person based on the first and second images, and to perform a function corresponding to the recognized gesture based on the first and second information stored in the storage device, wherein:
the second image is detected based on the first image,
the functions are different ones of the display device, and
the gestures are made with at least one body part of the person captured in the second image.

2. The display device of claim 1, wherein the processor determines coordinate information of the person in the first image and extracts the gesture of the person in the second image based on the coordinate information.

3. The display device of claim 2, wherein the coordinate information includes distance information.

4. The display device of claim 1, wherein the first sensor is a depth image sensor and the second sensor is a color image sensor.

5. The display device of claim 1, wherein the second image includes a zoomed view of the at least one body part.

6. The display device of claim 1, wherein the recognized gesture corresponds to an orientation of the at least one body part.

7. The display device of claim 1, wherein the second image is a higher resolution image than the first image.

8. The display device of claim 1, wherein the processor:
forms combined information based on the first and second images, and
recognizes the gesture based on the combined information.

9. The display device of claim 1, wherein when the body part is in motion:
information from the first and second sensors are combined to recognize the gesture, the information from the first sensor including distance information and the information from the second sensor including color information.

10. The display device of claim 1, wherein the second sensor tracks movement of the at least one body part based on information from the first sensor.

11. The display device of claim 1, wherein the gesture corresponds to the trace of a letter in air and wherein the at least one body part is a finger or hand used to trace the letter.

12. The display device of claim 1, further comprising:
a storage device to store information identifying a plurality of gestures for each of a plurality of users, each of the plurality of gestures corresponds to a different one of the functions and wherein one or more functions mapped to the gestures of a first user are different from one or more functions mapped to the same gestures of the second user.

13. A control method comprising:
storing first information and second information, the first information identifying a plurality of gestures mapped to respective ones of a plurality of functions identified by the second information; and
detecting a first image of a person;
detecting a second image of the person;
recognizing a gesture of the person based on the first and second images; and
performing a function corresponding to the recognized gesture based on the first and second information, wherein the second image is detected based on the first image, the functions are different ones of a display device, and the gestures are made with at least one body part of the person captured in the second image.

14. The method of claim 13, wherein said recognizing includes:
determining coordinate information of the person in the first image, and
extracting the gesture of the person in the second image based on the coordinate information.

15. The method of claim 14, wherein the coordinate information includes distance information.
